# EUROPEAN PATENT APPLICATION

(11) **EP 3 093 273 A1**
(43) Date of publication of application: **16.11.2016**
(21) Application number: 16169978.0
(22) Date of filing: 17.05.2016
(51) Int. Cl.: C02F 1/02, C05D 3/02, C01F 11/18, F26B 7/00

(54) **METHOD FOR RECYCLING CALCIUM CARBONATE SLUDGE**

(30) Priority: 15.05.2015 BE 201505302
(71) Applicant: Van Reeth, Constant, 2570 Duffel (BE)
(72) Inventor: Van Reeth, Constant, 2570 Duffel (BE)
(74) Representative: V.O.

(57) **Abstract**

A method for the recycling a particulate mineral by-product formed during the sawing, edging, polishing or the like of a calcium carbonate-containing rock, wherein the particulate mineral by-product contains calcium carbonate containing particles having a particle size such that the d90 is between 0.01 and 200 micron, wherein the particulate mineral by-product is at least partially dewatered by mixing with quicklime. Such recycled sludge is suitable for use as a soil improver, as an additive for construction materials and as an additive for plastics for improving the impact resistance.

## Description

The present invention relates to a method for recycling of a particulate mineral by-product formed during sawing, edging, polishing or the like of calcareous rock. This invention in particular relates to a method for recycling of a mineral by-product of an aqueous sludge of calcium carbonate particles, in particular an aqueous sludge which originates from sawing, edging or polishing or an equivalent processing of lime-containing rock, in particular, blue hardstone.

Limestone and dolomite, which are carbonate based rocks, know wide application as soil conditioner for agricultural soil because of their slow but prolonged action in time due to the limited solubility of these materials in the water present in the farmland. In this soil conditioning application, they are typically used in the form of a granulate of particles of a certain particle size. In order to be suitable for digestion by plants and agricultural crops and thus in order to be bio-available, it is particularly important that the carbonate compound has a sufficiently fine particle size when applied to the soil.

In general, the desired particle size of a granulate for an intended application is achieved by the milling of larger particles to smaller particles of the intended size. Not only when used in agriculture, inter alia, but also in other industrial applications, it is of importance that the quality of the calcium carbonate or the carbonate-containing rock is constant: the presence of too large or too small particles, or a granulate having a particle size distribution and / or chemical composition that is too wide or too narrow, may adversely affect the use in the intended application, which is not desirable.

Although the calcium carbonate or carbonate-containing granulate used as a soil improver may contain water, a too elevated water content is undesirable as well. Farmer as well as users in other fields of application namely appreciate a constant product quality, which is such that it may be assessed, also in relation to the water content. Moreover, a too high water content would increase transport costs and a product with a too high water content risks to freeze in winter time.

In order to solve the problem of a too high water content, the calcium carbonate or the carbonate-containing rock may be dried. A well-known energetically favorable drying process makes use of quicklime, CaO, which is mixed with the still moist calcium carbonate and which reacts with the water contained in the calcium carbonate or the carbonate-containing rock. The mixing gives rise to an exothermic reaction, which may give rise to an additional evaporation of the moisture present.

Lime stone or in other words calcium carbonate-containing rocks such as for example, marble, blue hardstone, are mined from veins of the relevant rock. Although the extraction usually takes place with the intervention of explosives, it can also be carried out by sawing or polishing of blocks or columns from the rock. The inventors have found that the benefit of these latter techniques when compared to the use of explosives is that the particles exhibit less cracking, as a result of which the contamination with hydrocarbons is much lower (0.35g / 100g), and the particles have an irregular shape which improves their adhesion and strength. These blocks or columns are then made into blocks, plates or other shapes, with the desired dimensions, by means of sawing or edging. The surface of the thus sawn plates or other forms is often subjected to a subsequent sanding and / or polishing in order to obtain a product with the desired surface quality and surface smoothness. Thereby a mineral by-product is produced in the form of a fine powder or fine particles of the rock. Commonly used sawing devices make use of cooling water to achieve cooling of the saw or polishing disc, or any other device used. The water also ensures the discharge of the fine particles of the rock formed during the sawing in the form of a saw sludge. A saw sludge can also be formed when grinding and polishing such rocks. Although this sludge may contain a valuable resource for agriculture and industry, to date this sludge has usually been dumped.

The present invention therefore aims to provide a process which allows an advantageous use of such a mineral by-product derived from the processing of calcium carbonate containing rocks, in particular the mineral by-product obtained by sawing, edging, polishing or otherwise working of calcium carbonate rock or calcium carbonate containing rock with any similar technique. This invention intends in particular to provide a method for the recycling of sludge which originates from the sawing, edging or polishing or working with an equivalent technique, of calcium carbonate containing rocks, and in particular of blue hard stone which contains such a mineral product.

US1.721.803 discloses a method for the production of dry, ground limestone that is suitable for use as a fertilizer. According to the method know from US1.721.803, limestone is won in the form of bigger pieces, which are ground to fine particles and then mixed with a quantity of lime for absorbing moisture present in the quarried limestone. The amount of quick lime is chosen such that it is sufficient to bind the water present in the limestone, the quicklime is administered in some excess. A dry preparation is obtained which is also suitable for storage in moist air for some time, without a risk to freezing to a hard lump with cold weather. The dry preparation is ground to limestone particles in a size that is suitable for direct use as a fertilizer.

The process described in US1. 721.803 however presents the drawback that it always requires a step of grinding of the limestone particles to a desired size. On the one hand this implies the application of an additional process step with an associated cost which moreover entails the risk that in the course of the grinding the limestone particles again absorb water and aggregate into larger particles. According to US1.721.803 particles of 100 mesh or finer are suitable for use as a fertilizer.

FR2.620206 describes a process for the chemical drying of fine calcium carbonate or magnesium carbonate rocks. Magnesium limestone or limestone having a water content of between 1 and 10 % is ground to a particle size of 0/315 microns, and then mixed in a mixer with quicklime having a particle size of 0/1 mm. A part of water present in the rock is absorbed by the reaction with the quicklime. An increased solubility of the carbonate in the bottom was observed. The product is considered suitable for use on acid soils.

EP430751 discloses to transport limestone or dolomite, in particular waste originating from the wash of these rocks and dust present on filters of devices used in grooves where the rock is mined, to a mixing device for mixing the dust with 30% of quicklime relative to the rock, thereby making use of an endless screw. Then, the mixture is guided to an expansion and drying device mounted in the housing. The housing is heated by the exothermic hydration of the quicklime. This heat is used for the removal of the water vapor saturated with air from the housing, which is in communication with the open air. The dried material is suitable for use in agriculture, it has a fine particle size, shows good adhesion to the soil and is therefore not easily entrained with the wind.

WO99/55643 describes to transform waste which originates from a cement kiln and other particulate calcium sources containing CaO, Ca(OH)₂ or other hydratable calcium compounds, into an agglomerate and to use it as a soil improver. A process for the production of the agglomerate comprises combining particles of a calcium source and a water-soluble binder to produce agglomerates which are then subjected to a controlled drying process, so that the dried agglomerates have a particle size of between -7 to +8 mesh Tyler Standard Sieve Series and have a tensile strength of at least 2 pounds (about 0.9 kg). The agglomerate is converted into pellets by mixing with the water-soluble binder and other basic nutrients for agricultural crops.

However, the known methods described above always contain one or more steps in which a particle size reduction or grinding or other processing is to be carried out in order to arrive at a product with the desired particle size which is suitable for use in agriculture .

The present invention now aims to provide a method for recycling of a particulate mineral by-product, in particular a method for the recycling of an aqueous sludge containing such a particulate mineral by-product, which is generated from the processing, in particular sawing, edging or polishing or otherwise processing of calcium carbonate containing rocks, in particular, blue hardstone, without requiring the particles of the mineral by-product to be subjected to an additional particle size reduction in order to make them suitable for the intended application.

This invention in particular aims to provide a method for the recycling of a particulate mineral by-product, in particular a method for recycling of an aqueous sludge containing such a particulate mineral by-product, generated during the processing, in particular sawing, edging, polishing or otherwise processing of calcium carbonate-containing rocks, in particular blue hardstone, where use is made of a diamond saw or equivalent tool

This invention relates therefore to a method for the recycling of a particulate mineral by-product formed during the sawing, edging, polishing or the like of lime-containing rock, and is characterized in that the particulate mineral by-product contains calcium carbonate particles having a particle size which is such that the d90 is between 0.01 and 200 micron, in that the particulate mineral by-product is at least partially dewatered by mixing with a quantity of quick lime for the drying of the sludge.

In the process of this invention the sludge or powder is preferably derived from the sawing or edging or polishing of calcareous rock or in other words from calcium carbonate-containing rock. In the process of this invention, the sludge is more preferably derived from the sawing or edging or polishing, or of an equivalent processing of the rock, wherein use is made of a diamond saw or of an equivalent tool that delivers a similar mineral by-product. The sawing surface of a diamond saw contains many diamonds, which permit to carry out the sawing, edging or polishing of the rock into the desired slabs or blocks. The inventor has now observed that in the course of the sawing, edging or polishing of calcareous rock or in other words calcium carbonate-containing rocks, with a diamond saw as described above, particles of a mineral by-product are released from the rock which have a particle size that is immediately suitable for use in a variety of industrial applications, including agriculture, without the need for further particle size reduction. This is an important advantage.

The inventor has further observed that the calcium carbonate containing particles produced during the sawing, edging or polishing of a calcium carbonate containing rock with a diamond saw have a very irregular shape, with numerous projections and edges. This shape provides particular advantages in the industrial application of these particles and provides particles with a reduced content of contamination by hydrocarbons.

In a preferred embodiment, the particles of the mineral by-product contain calcium carbonate or calcium carbonate-containing particles. In another preferred embodiment, the particles of the mineral by-product consist essentially of calcium carbonate or calcium carbonate-containing particles. Most preferably, the particles of the mineral by-product consist essentially of calcium carbonate.

After having been partially dewatered and dried with quicklime, the calcium carbonate-containing particles obtained with the process of this invention usually have a particle size which is such that the d90 is between 10 and 1500 micron, preferably between 10 and 1000 micron, more preferably between 50 and 850 micron, most preferably between 100 and 750 micron. In the context of this invention with "particle size" is meant the particle size determined using laser diffraction. The dried particles may have a d90 greater than the particles contained in the sludge. This is presumably due to the aggregation of individual particles in the course of the drying of the sludge. By exposing the dried particles to a mechanical action, for example, vibration or any other suitable treatment, the particle size can be reduced. Calcium carbonate-containing particles obtained after such a treatment may have a particle size such that the d90 is between 0.01 and 200 micron, between 0.5 and 150.0 micron, preferably between 1.0 and 100 micron. Calcium carbonate particles that have been treated that way preferably have an average d50 particle size which is smaller than 50 micron, preferably less than 25 micron, more preferably less than 15 micron, most preferably less than 10 micron.

In fact, the inventor has observed that the calcium carbonate-containing particles present in such a by-product or sludge have a particle size which is such that the d90 is between 0.01 and 200 micron, in particular between 0.5 and 150.0 microns, more in particular between 1.0 and 100 micron. The inventor has further found that the particles have an average particle size d50 of less than 50 micron, preferably less than 25 micron, more preferably less than 15 micron, most preferably less than 10 micron. In the context of this invention with particle size is meant, the particle size determined using laser diffraction.

In the context of this invention, with calcium carbonate rock or calcium carbonate-containing rocks is meant a broad range of naturally occurring rocks, in particular rocks that contain metamorphic calcium carbonate. Examples of such rocks are, without being limited thereto, limestone, marble, travertine, bluestone, blue hardstone, dolomite, dolomite limestone, gypsum, calcite, hardstone, but also fossil calcium carbonate containing rocks and limestone with a lower hardness. Such rocks are essentially composed of calcium carbonate, but they may include other compounds such as magnesium carbonate or other impurities.

Preferably however in the process of this invention use is made of the mineral by-product or sludge produced during the sawing or edging of blue hardstone, because of the high purity of this stone. Blue hardstone or bluestone or coal calcareous stone consists almost entirely of limestone, the concentration of metals or other substances such as phosphorus present in the stone, other than calcium carbonate, is minimal. Bluestone is characterized by the presence of many remains of crinoids, animals with a calcium carbonate skeleton. The stone results from the adhesion of crinoids in a cement of microcrystalline calcite.

The prior separation and removal of at least part of the water present is of particular importance in case the mineral by-product is an aqueous sludge. This prior removal of water followed by further drying of the at least partially dewatered sludge with quicklime as a drying agent for the sludge, offers the advantage that the particle size of the calcium carbonate sludge particles can be controlled and does not increase too much during the drying, so that the dried calcium carbonate sludge is suitable for direct use as a soil improver in agriculture or in other applications, without requiring the dried sludge to be subjected to an additional grinding step to obtain particles of the desired size.

Without wishing to be bound to this theory, the inventor assumes that this is at least partly due to the particle size of the calcium carbonate containing particles present in the mineral by-product, in particular sludge, which is sufficiently small. Because of the at least partial dewatering of the sludge prior to bringing it in contact with quicklime, the development of heat as a result of the exothermic reaction upon contact of calcium carbonate with lime may be held within acceptable limits, in such a way that the particle size of the calcium carbonate particles do not increase or hardly increase.

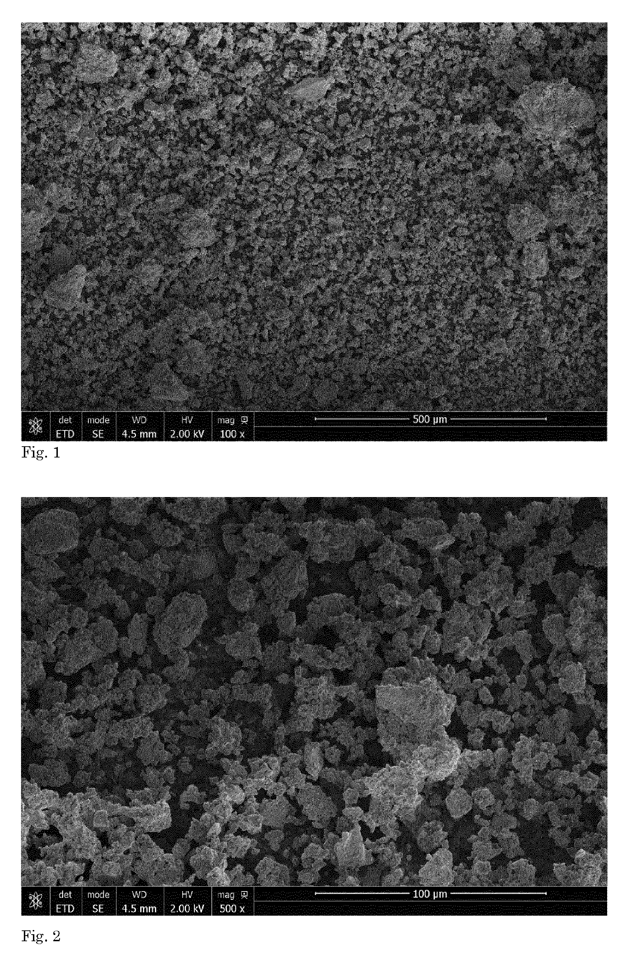

The thus obtained dried particles of the mineral by-product, in particular dried calcium carbonate-containing particles offer the further advantage that they have a very irregular shape, with numerous projections and edges, as shown in the photographs in figures 1 and 2. The irregular shape is imparted by the process by which the sludge is produced, in particular, as a by-product in the processing of calcium carbonate-containing rocks using a diamond saw. The irregular shape reduces the mobility of the particles. Once applied to the soil, there is a minimum risk of roll-over, and an increased tendency to incorporation in the soil. The irregular shape also results in a better dispersibility of the particles in other substances, such as liquids, viscous materials such as resins, inks, or adhesives and the like, or molten plastics, good adhesion to other materials and renders the particles particularly suitable for use as a functional filler for plastics, for example in injection molding for the manufacture of panels, crates and other articles made from plastics, in particular when the particulate material is calcium carbonate containing particles,.

If the mineral by-product is a water-containing sludge, in the process of this invention preferably the water contained in the sludge is removed to the largest possible extent prior to the mixing with the quicklime, in order to keep the consumption of quicklime as low as possible. The aqueous sludge produced by sawing, edging or polishing of calcium carbonate-containing rock may namely contain widely varying amounts of water. In order to avoid that a too large quantity of quicklime or CaO must be used in order to achieve a sufficient drying, the aqueous sludge is preferably at least partly de-watered, prior to adding quicklime. In particular, the sludge is stripped of water in such a way that the at least partially dewatered sludge contains maximum 30.0 wt. % of water, preferably maximum 25.0 wt. %, more preferably maximum 20.0 wt. %, in particular at most 15 wt. %, more in particular at most 10 wt. %.

For the dewatering the water-containing or in other words the aqueous sludge, prior to bringing it into contact with the quicklime, a wide range of techniques known to the skilled person can be used. Well-known techniques are the filtering of the sludge, the centrifugation and settling, wherein the sludge remains on the filter and water is collected as filtrate in the filtration. Preferably, the sludge is allowed to settle, whereby the sludge is separated as lower layer and the water is collected at the upper layer. The settling of the sludge can be carried out in one, two or more steps, wherein water is repeatedly drained off every time again. Between subsequent settling steps, the sludge is preferably reversed in order to promote the separation of water.

The amount of lime to be added to the at least partially dewatered sludge in order to achieve further drying of the sludge can vary within wide limits and is usually selected by the skilled person taking into account the amount of water present in the sludge. However, the amount of quicklime added will usually be maximum 10.0 wt. % relative to the amount of gene least partially dewatered sludge, preferably maximum 5.0 wt. %, more preferably maximum 3.0 wt. %. Usually, at least 0.5 wt. % of quicklime will be added, more preferably minimum 1.0 wt. %. The exothermic reaction of the lime with the water makes it possible that the drying of the sludge follows from two simultaneously occurring phenomena, in particular on the one hand the exothermic reaction of the quicklime with the water, and on the other hand evaporation of the water by heating of the sludge as a result of the exothermic reaction. This makes it possible to reduce the amount of quicklime required to a minimum.

The dried sludge obtained this way with the process of this invention usually has a water content of not higher than 2.0. wt. % relative to the total weight of the sludge, preferably the water content is not higher than 1.0 wt. %, more preferably not higher than 0.5 wt. %, most preferably not higher than 0.10 wt. %.

In a preferred embodiment, the heat generated during the exothermic reaction of the quicklime with the at least partially dried sludge is collected in a heat exchanger. This heat can be used in a later stage, for the drying of water-containing sludge.

The calcium carbonate obtained with the process of this invention shows the additional advantage of having a high purity. In particular, the concentration of impurities such as heavy metals, mono- and polycyclic aromatic hydrocarbons and other organic substances is very low. More in particular the content of As, Cd, Cr, Cu, Hg, Pb, Ni, Zn is very low. The concentration of As is usually lower than 40 ppm, preferably below 20 ppm; the amount of Cd is typically below 1 ppm, preferably below 0.5 ppm; the amount of Cr is usually below 10 ppm, preferably below 5 ppm; the amount of Cu is usually below 50 ppm, preferably below 25 ppm, the amount of Hg is usually below 0.2 ppm, more preferably below 0.1 ppm, the amount of lead is usually below 20 ppm, preferably below 10 ppm, the amount of Ni is usually below 15 ppm, preferably below 8.5 ppm, and the amount of Zn is usually below 50 ppm, preferably below 25 ppm. The calcium carbonate may also contain P and / or N, these are preferred components for a soil improver. The concentration of phosphorus will usually be at least 1 g per kg, preferably at least 1.5 g per kg. The amount of N is preferably at least 0.5 g / kg, more preferably at least 0.75 g / kg, more preferably at least 0.9 g / kg.

The concentration of the impurities in the form of hydrocarbons present in the calcium carbonate is typically less than 1.0 g per 100 g, preferably not more than 0.50 g per 100 g, more preferably not more than 0.35 g / 100g. The concentration of monocyclic aromatic hydrocarbons, such as for example, benzene, ethyl benzene, styrene, toluene, xylene is usually lower than 0.1 ppm, preferably less than 0.05 ppm for each of the aforementioned compounds. The concentration of polycyclic aromatic hydrocarbons, such as for example, benzo (a) anthracene, benzo (a) pyrene, chresene, phenanthrene, fluroranthene, naphthalene, etc. is generally less than 0.05 ppm, preferably less than 0.01 ppm for each of the individual compounds. Also, compounds such as hexachlorobenzene, 1,2-dichloroethane, dichloromethane, trichloroethylene, tertrachloroethenz, carbon tetrachloride, vinyl chloride will not usually be present in a concentration which is higher than 0.05 ppm, preferably not higher than 0.01 ppm for each individual component. Also, the concentration of other organic substances such as 1,1,1 trichloroethane, 1,1,2 trichloroethane is usually less than 0.05 ppm, preferably less than 0.02 ppm, ethane, hexane, hetptane, octane are usually present in a concentration below 0.5 ppm; mineral oil, C₁₀-C₁₂ hydrocarbons, C₁₂-C₂₀ hydrocarbons, C₂₀-C₃₀ hydrocarbons, C₃₀-C₄₀ hydrocarbons are usually present in a concentration below 20 ppm.

In a preferred embodiment of the invention the calcium carbonate-containing particles obtained with the method of this invention have an average particle size d50 of less than 50 micron, preferably less than 25 micron, more preferably less than 15 micron, most preferably less than 10 micron. The average particle size will usually be at least 0.05 micron, preferably at least 0.1 micron, more preferably at least 0.5 micron.

The dried calcium carbonate obtained with the process of this invention can be used as such as a soil improver in agriculture, for example, fruit or vegetable, in the growing of crops etc. Within the framework of this invention, it is however also possible to add additional nutrients, such as, for example, N, P, K sources. Examples of such fertilizers are ammonium nitrate, ammonium sulfate, alkali metal nitrate, urea, ammonium phosphate, phosphates, aluminum phosphates, potassium salts, for example chlorides, sulfates and nitrates.

The dried calcium carbonate obtained with the process of this invention is particularly suitable for use in acidic soils or in combination with acidic fertilizers or soil improvers, since it develops a basic pH in the presence of water and may thus impart a neutralization of an overly acidic soil or an too acidic fertilizer to the desired level.

The dried calcium carbonate obtained with the process of this invention is further particularly suitable for use as a filler for resins and resin-based formulations and in applications such as lacquer, adhesive, varnish, paint, ink, e.g., ink intended for use in inkjet printing, offset printing, gravure printing, lithography, etc., for plastics, for example, as a filler for plastics for injection molding of forms, such as plastic panels, crates, etc. which should have a high impact resistance, or as a filler for plastics that are processed into a film or in many other applications. The dried calcium carbonate obtained by the process of this invention is further particularly suitable for use as an additive for resins used in the production of carpets, floor covering plain carpet etc. The dried calcium carbonate obtained with the process of this invention is further particularly suitable for use as an additive for silica waste streams, or as a filler in construction materials, e.g., brick, concrete (blocks), etc., or as a filler in road construction, asphalt for example.
Figure 1 shows the dried sludge of the present invention in a photograph taken with an electron microscope, enlargement 500 micron.
Figure 2 shows the dried sludge of the present invention in a photograph taken with an electron microscope, enlargement 100 micron.
Figure 3 shows the particle size distribution of the dried sludge shown in Figures 1 and 2.

The invention is further illustrated with reference to the following example.

### Example.

Water containing sludge which has been produced during the sawing of Belgian blue hardstone was analysed for its composition. The composition was as follows :

| | |
|---|---|
| CaCO₃ | 81 wt. % |
| SiO₂ | 9 wt. % |
| CaMg(CO₃)₂ | 4 wt. % |
| Calciumhydroxide | 4 wt. % |
| A-Al₂O₃ | 1 wt. % |
| FeS₂ | 1 wt. % |

The sludge had a pH of 9 and a dry material content of 74.25 wt. % 99.53 % of the particles had a particle size smaller than 0.16 mm, 97.29 % of the particles had a particle size smaller than 0.0625 mm.

The following impurities could not be shown to be present :
hexachloro benzene, chloro methane compounds, chloro ethene compounds, hexane, heptane, octane. The concentration of C₂₀-C₃₀ hydrocarbons was 17.42 mg/kg, the concentration C₃₀-C₄₀ hydrocarbons in the particles was 16.55 mg/kg. Benzene, styrene, toluene, xylene could not be assessed, neither could be assessed antracene compounds, pyrene compounds and naphtalene.

The composition of the powder after at least partial dewatering and treating with quicklime was as follows :

| | |
|---|---|
| CaCO₃ | 85 wt. % |
| 10 Ca(OH)₂ | 13 wt. % |
| SiO₂ | < 2 wt. % |
| Fe₂O₃ | < 0.5 wt. % |
| H₂O | < 0.3 wt. % |

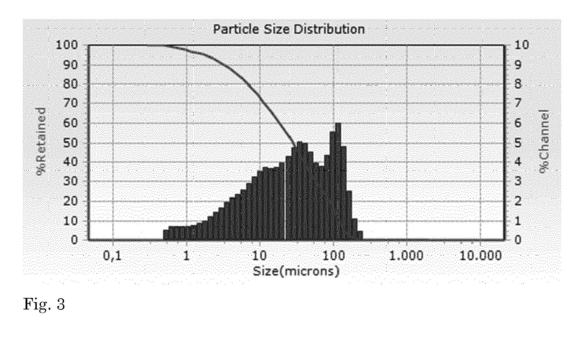

Figure 1 and 2 show an electron microscopic photo of the particles after drying The particle size distribution determined using laser diffraction is shown in figure 3.

## Claims

1. A method for recycling a particulate mineral by-product formed during the sawing, edging, polishing or the like of a calcium carbonate-containing rock, **characterized in that** the particulate mineral by-product contains calcium carbonate containing particles having a particle size such that the d90 is between 0.01 and 200 micron, **in that** the particulate mineral by-product is at least partially dewatered by mixing with quicklime.

2. A method according to claim 1, wherein the mineral product is a water containing sludge containing the particles of the mineral by-product.

3. A method according to claim 1 or 2, wherein the calcium carbonate-containing particles present in the mineral by-product have a particle size with a d90 of between 0.5 and 150.0 micron, preferably between 1.0 and 100 micron.

4. A method according to any one of the preceding claims, wherein the calcium carbonate-containing particles in the by-product have an average particle size with a d50 of less than 50 micron, preferably less than 25 micron, more preferably less than 15 micron, most preferably less than 10 micron.

5. A method according to any one of the preceding claims, wherein the particles of the particulate mineral by-product, in particular the calcium carbonate-containing particles and the recycled particles, have an irregular shape.

6. A method according to any one of claims 2 to 5, wherein the sludge prior to the addition of quick lime is at least partially dewatered by settling in the water, followed by separating of the supernatant water from the settled sludge.

7. A method according to claim 6, wherein the at least partially dewatered sludge contains maximum 30.0 wt. % of water, preferably maximum 25.0 wt. %, more preferably maximum 20.0 wt. %.

8. A method according to claim 6 or 7, wherein a maximum of 10.0 wt. % of quicklime is added relative to the amount of the least partially dewatered sludge, preferably a maximum of 5.0 wt. %, more preferably a maximum of 3.0 wt. %.

9. A method according to any one of the preceding claims, wherein the calcium carbonate-containing rock is selected from the group of limestone, marble, travertine, bluestone, blue hardstone, hard stone, dolomite, dolomite limestone, gypsum, calcite, and fossil calcium carbonate-containing rocks

10. A method according to any one of the preceding claims, wherein the mineral by-product, in particular the calcium carbonate-containing particles are a by-product derived from sawing, edging, polishing of calcium carbonate containing rocks or a by-product of calcium carbonate containing rocks treated in an equivalent manner with a diamond saw, or an equivalent device.

11. A method according to any one of the preceding claims, wherein the amount of calcium carbonate present in the recycled particles is at least 75 wt. %, preferably at least 80.0 wt. %, more preferably at least 85.0 wt. %.

12. A method according to claim 9, 10 or 11, wherein an amount of impurity in the form of hydrocarbons present in the recycled particles is less than 1.0 g per 100 g of recycled particles, preferably not more than 0.50 g per 100 g, more preferably no more than 0.35 g / 100g.

13. A method according to any one of the preceding claims, wherein the calcium carbonate-containing particles obtained by the process of this invention have a particle size which is such that d90 is between 10 and 1500 micron, preferably between 10 and 1000 micron, more preferably between 100 and 750 micron.

14. A method in which the recycled sludge obtained by the process according to any one of claims 1 to 13 is used as a soil improver in agriculture, as a filler in building materials, as an additive in the processing of plastics, or as a filler in a resin, paint, adhesive or ink.
